# EUROPÄISCHE PATENTSCHRIFT

(11) **EP 1 284 856 B1**
(45) Veröffentlichungstag und Bekanntmachung des Hinweises auf die Patenterteilung: **26.11.2003**
(21) Anmeldenummer: 01940408.6
(22) Anmeldetag: 05.05.2001
(51) Int. Cl.: B32B 7/00, F41H 5/04, B32B 3/10

(54) **PANZERUNGSVERBUNDMATERIAL**
ARMOR-PLATING COMPOSITE
COMPOSITE POUR LE BLINDAGE

(30) Priorität: 11.05.2000 DE 10023181
(43) Veröffentlichungstag der Anmeldung: 26.02.2003
(73) Patentinhaber: Teijin Twaron GmbH, 42103 Wuppertal (DE)
(72) Erfinder: MOHR, Michael, 42113 Wuppertal (DE); GEITZ, Carsten, 42119 Wuppertal (DE); WINTERSIEG, Jörg, 42109 Wuppertal (DE)
(74) Vertreter: Fett, Günter
(86) Internationale Anmeldenummer: EP0105114
(87) Internationale Veröffentlichungsnummer: WO01085443

(56) Entgegenhaltungen:
- EP-A- 0 678 724
- DE-A- 4 114 809
- US-A- 2 723 214
- US-A- 4 241 457

## Beschreibung

Die Erfindung betrifft ein Panzerungsverbundmaterial mindestens umfassend eine der Bedrohungsseite zugewandte, auf einer ersten Tragschicht angeordnete Frontschicht, die aus mehreren benachbarten, formschlüssig aneinander anschließenden Frontschichtsegmenten besteht, eine der Bedrohungsseite abgewandte rückwärtige Schicht und eine zwischen Frontschicht und rückwärtiger Schicht angeordnete Stützschicht.

Derartige Panzerungsverbundmaterialien werden zum Schutz gegen Geschosse und Sprengstoffexplosionen beispielsweise in gepanzerten Fahrzeugen eingesetzt oder zum Schutz von Personen und/oder Gegenständen auf Bahnhöfen, in Flughäfen oder in öffentlichen Gebäuden.

So offenbart DE-A-39 37 087 ein mit einer Panzerplatte versehenes Bauteil, bei dem die Panzerplatte auf ein leichtes Stützelement aufgebracht ist und auf ihrer Vorderseite mit einer Deckschicht versehen ist. Die Panzerplatte besteht aus einer Keramikverbundplatte, die auf ihrer Rückseite eine Tragschicht aus Aramid oder glasverstärktem Kunststoff aufweist. Das Stützelement kann aus einem leichten Werkstoff, wie Aluminium, Holz oder dergleichen bestehen oder aus einem mit Hohlräumen versehenen Gegenstand wie gelochten Blechen oder Hartschaumstoff hergestellt sein. Mit dieser Panzerplatte soll eine gute Schutzwirkung erreicht werden.

WO 96/29561 offenbart ein mehrschichtiges Panzerschutzmaterial, das aus einer wahlweise ein- oder vielstückigen, keramischen oder metallischen Frontschicht und einer dieser nachgeschaltenen harten Stützschicht gebildet ist. Als Stützschicht wird in dieser Schrift ein Kunstharzpressholz eingesetzt. Weiterhin kann der Kunstharzpressholzschicht eine weitere Schicht auf der der Frontpanzerung abgewandten Seite zugeordnet sein, die insbesondere aus einem Panzerstahlblech, einem Duralwerkstoff, einer Titanlegierung, einem GFK oder Aramidlaminat gebildet ist. Mit diesem Aufbau soll ein mehrschichtiges Panzerschutzmaterial zur Verfügung gestellt werden, das leicht, biegehart und preiswert ist, bei hoher Belastung und insbesondere um den Impaktbereich herum praktisch nicht delaminiert und außerdem noch Energie vernichten kann.

Bei der Prüfung der durchschusshemmenden Eigenschaften von Material nach DIN EN 1522 wird als Zusatzbedingung das Trefferbild eines gleichseitigen Dreiecks herangezogen, um das Multihit-Verhalten der Panzerung zu untersuchen. Gemäß der derzeitigen gültigen Bestimmung hat die Seitenlänge des Dreiecks 120 ± 10mm zu betragen.

Gemäß WO 96/29561 soll mit dem darin offenbarten Panzerungsverbundmaterial die Multihitfähigkeit gegenüber einem Aufbau, bei dem statt der Kunstharzpressholzschicht eine GFK-Schicht eingesetzt wird, verbessert werden. In WO 96/29561 wird vermutet, dass sich die zulässigen Trefferabstände gegenüber einem optimierten Keramik-GFK- und /oder Aramid-Verbund der üblichen Bauart in etwa halbieren lassen. WO 96/29561 enthält jedoch keinerlei Versuchsergebnisse, so dass keine Rückschlüsse auf das tatsächlich erreichbare Multihit-Verhalten des darin offenbarten Aufbaus möglich sind.

US 4,241,475 offenbart eine Schutzkleidung, die segmentierte Platten umfaßt. Die Platten der ersten und zweiten Lage haben die gleiche Größe, sind jedoch zueinander versetzt angeordnet.

US 2,723,214 offenbart ein Material, das zum Einsatz als Schutzkleidung geeignet ist und drei segmentierte Plattenlagen aufweist, die jeweils auf einer Lage eines elastischen Materials angeordnet sind. Die Segmente der der Bedrohung zugewandten Platte haben eine kleinere Fläche als die Segmente der nachfolgenden Platten und sind so angeordnet, daß keine Verbindungslinie zwischen zwei Segmenten direkt oberhalb und parallel zu einer Verbindungslinie von Segmenten einer nächsten benachbarten Lage ist.

Die Ansprüche, die an den Schutz von Panzerungen gestellt werden, werden stets höher, und es ist nicht auszuschließen, dass bei dem Trefferbild eines gleichseitigen Dreiecks zukünftig Auflagen bezüglich geringerer Seitenlängen gemacht werden. So stehen neuerdings bereits Seitenlängen von 45 mm zur Diskussion.

Der Erfindung liegt daher die Aufgabe zugrunde, ein Panzerungsverbundmaterial zur Verfügung zu stellen, das ein verbessertes Multihit-Verhalten aufweist und auch Forderungen nach einem Trefferbild mit geringerem Schussabstand gerecht wird.

Diese Aufgabe wird mit einem Panzerungsverbundmaterial gelöst, mindestens umfassend eine der Bedrohungsseite zugewandte, auf einer ersten Tragschicht angeordnete Frontschicht, die aus mehreren benachbarten, formschlüssig aneinander anschließenden Frontschichtsegmenten besteht, eine der Bedrohungsseite abgewandte rückwärtige Schicht und eine zwischen Frontschicht und rückwärtiger Schicht angeordnete Stützschicht, die aus mehreren Stutzschichtsegmenten besteht und wobei die Stützschichtsegmente eine Fläche parallel zur Frontschicht aufweisen, die gleich groß ist oder kleiner ist als die Fläche der Frontschichtsegmente parallel zur Frontschicht und wobei die Stützschichtsegmente so unterhalb den Frontschichtsegmenten angeordnet sind, dass diese bezüglich ihrer Randbegrenzungen bündig übereinander angeordnet sind.

Dabei kann unter einem Frontschichtsegment jeweils ein Stützschichtsegment angeordnet sein, das die gleiche Fläche aufweist wie das Frontschichtsegment, wobei die beiden Segmente bezüglich ihrer Randbegrenzungen bündig übereinander angeordnet sind. Es kann aber auch unter einem Frontschichtsegment eine Gruppe aus zwei oder mehreren Stützschichtsegmenten angeordnet sein, die insgesamt die gleiche Fläche aufweist wie das Frontschichtsegment und wobei die Gruppe der Stützschichtsegmente sich mit ihrer Randbegrenzung bündig an die Randbegrenzung des Frontschichtsegments anpasst.

Die erste Tragschicht für die Frontschichtsegmente kann aus einem faserverstärktem Kunststoff geringer Dicke bestehen, wie einem Aramidlaminat, einem glasfaserverstärkten Kunststoff oder einem Polyethylenlaminat. Bevorzugt wird ein Aramidlaminat, das beispielsweise aus zwei oder drei in einer Elastomermatrix eingebetteten Gewebelagen aus Aramidgarnen besteht. Auch die Verwendung einer einzelnen laminierten Gewebelage ist möglich. Auf der Tragschicht können die Frontschichtsegmente mit einem Kleber, wie einem Kleber auf Polyurethanbasis aufgeklebt sein. Auch die Stützschichtsegmente können auf einer Tragschicht angeordnet sein. Diese kann beispielsweise aus faserverstärktem Kunststoff, einer Kunststofffolie oder einem Glasgewebe bestehen, die in vorteilhafter Weise einseitig selbstklebend ausgerüstet sein können, um die Stützschichtsegmente direkt auf diesen zu befestigen. Es ist aber auch möglich, auf eine separate Tragschicht für die Stützschichtsegmente zu verzichten und diese direkt auf der rückwärtigen Schicht, beispielsweise mit einem Kleber, zu befestigen. Für die rückwärtige Schicht, auch Backing genannt, kann ein Faserverbundwerkstoff gewählt werden, insbesondere ein Aramidlaminat. Dieses besteht aus mehreren Gewebelagen aus Aramidgamen, die ein- oder beidseitig mit einem elastomeren Material, einem Harz, wie beispielsweise Phenolharz, oder einem thermoplastischen Material beschichtet sind und anschließend verpresst werden.

Die Frontschichtsegmente können auf der der Bedrohung zugewandten Seite mit einer Deckschicht versehen sein, wie einer auflaminierten Decklage aus Aluminium, Glas oder Aramidgewebe.

Die erste Tragschicht mit den Frontschichtsegmenten, die ggf. mit einer Deckschicht versehen ist, kann mit den auf die zweite Tragschicht aufgebrachten Stützschichtsegmenten und die zweite Tragschicht mit der rückwärtigen Schicht mittels eines Klebstoffs verbunden sein.

Die Frontschichtsegmente liegen bevorzugt als Keramikkacheln vor. Bei quadratischen Kacheln sollte die Kachelgröße 20 x 20 mm bis 100 x 100 mm betragen, bevorzugt 20 x 20 mm bis 50 x 50 mm. Es ist auch der Einsatz von Kacheln mit dreieckiger, hexagonaler oder rechteckiger Form möglich. Wenn quadratische Kacheln eingesetzt werden, die beispielsweise eine der Bedrohungsseite zugewandte Querschnittsfläche von jeweils 30 x 30 mm aufweisen, haben die Stützschichtsegmente gemäß der Erfindung ebenfalls eine quadratische Form mit den Maßen 30 x 30 mm. Sie können aber auch eine kleinere Fläche als die Kacheln aufweisen, so dass beispielsweise unter einer Kachel der Größe 30 x 30 mm zwei Segmente der Stützschicht angeordnet werden, die jeweils eine Querschnittsfläche von 15 x 30 mm besitzen. Es können auch mehr als zwei Stützschichtsegmente unter einer Kachel angeordnet werden, beispielsweise drei Segmente der Größe 10 x 30 mm unter einer Kachel der Größe 30 x 30 mm. Bei gleicher Größe der Kacheln, die die Frontschicht bilden, und der Stützschichtsegmente ist in besonders vorteilhafter Ausgestaltung der Erfindung jedes Segment der Stützschicht direkt so unter einer Kachel angeordnet, dass die Ränder des Stützschichtsegmentes bündig mit den Rändern der Kachel abschließen. Damit ist jeder Kachel genau ein Stützschichtsegment zugeordnet, das keine direkte Berührung mit anderen Kachel hat.

Werden Stützschichtsegmente gewählt, die kleiner sind als die Kacheln, so sollte ihre Größe so bemessen sein, dass die Fläche der zu einer Gruppe vereinigten Stützschichtsegmente der Fläche einer Kachel entspricht, und dass die Gruppe von Stützschichtsegmenten so unter einer Kachel angeordnet werden kann, dass die Ränder der Gruppe bündig mit den Rändern der Kacheln abschließt. Damit ist jeder Kachel eine Gruppe von Stützschichtsegmenten zugeordnet, die keinen direkten Kontakt zu anderen Kacheln hat.

Es hat sich gezeigt, dass beim Mehrfachbeschuss einer klassischen Panzerung, die aus einer Lage aus Keramikkacheln auf einem rückwärtigen Backing besteht bei geringem Trefferabstand der zweite oder dritte Schuss nicht mehr gehalten wird, selbst wenn die einzelnen Schüsse nicht auf dieselbe Keramikkachel treffen. Dies ist darauf zurückzuführen, dass sich das Backing bereits nach dem ersten Schuss auswölbt und damit benachbarte Keramikkacheln nicht mehr den benötigten Halt und die Abstützung auf dem Backing haben, um einem weiteren Beschuss standzuhalten. Wie eingangs ausgeführt, wurde im Stand der Technik vorgeschlagen, unter der Frontschicht eine Versteifungslage als Stützschicht anzuordnen. Es hat sich aber gezeigt, dass auch diese Maßnahme nicht ausreicht, um einem Beschuss mit einem Trefferabstand beispielsweise in Form eines gleichseitigen Dreiecks mit einer Seitenlänge in der Größenordnung kleiner als 50 mm standzuhalten. Dieses Problem lässt sich mit dem Gegenstand der Erfindung überraschenderweise lösen.

Werden als Frontschichtsegmente keine Keramikkachein eingesetzt, sondern Segmente aus hochharten Stählen, so tritt das Problem des unzureichenden Multihit-Verhaltens in den Hintergrund, da derartige Aufbauten beim Mehrfachbeschuss gegenüber Aufbauten mit Keramikkacheln bessere Eigenschaften aufweisen. Aufbauten, bei denen als Frontschichtmaterial ein Stahl eingesetzt wird, haben gegenüber Aufbauten mit einer Keramik jedoch den Nachteil, dass sie wesentlich schwerer sind. Auch hier greift die Erfindung in vorteilhafter Weise ein. Durch die erfindungsgemäß zwischen der Frontschicht und dem Backing angeordnete segmentierte Stützschicht, kann die Materialstärke der Stahlsegmente, die die Frontschicht bilden, verringert werden ohne dass das Multihit-Verhalten verschlechtert wird, aber unter Erzielung einer vorteilhaften Gewichtseinsparung.

Für die Zwecke der Erfindung sollten die Stützschichtsegmente aus einem leichten, steifen Material bestehen. Insbesondere eignet sich dazu ein Material, das aus einer zwischen einer oberen und einer unteren dünnen Platte besteht, die über Stege in Wabenstruktur miteinander verbunden sind. Diese Materialien, wie sie auch im Flugzeugbau eingesetzt werden, zeichnen sich durch ein niedriges Gewicht bei gleichzeitig hoher Steifigkeit aus. Derartige Wabenstrukturen bestehen üblicherweise aus Materialien wie Aluminium, Papier, mit Aramid oder Kohlenstofffasern oder Glasfasern verstärkten Kunststoffen. Außer einem Material mit Wabenstruktur lässt sich für die Stützschichtsegmente auch ein Vollmaterial einsetzen, wie eine Vollkunststoffplatte zum Beispiel aus Polycarbonat oder eine Holzplatte. Die Dicke der Stützschichtsegmente sollte zwischen 2 und 10 mm liegen.

Im folgenden wird die Erfindung anhand von Figuren und Beispielen näher erläutert und beschreiben. Dabei zeigt:
- Figur 1:: schematisch den Aufbau eines erfindungsgemäßen Panzerungsverbundmaterials im Querschnitt.
- Figur 2:: eine Aufsicht auf die Frontschicht

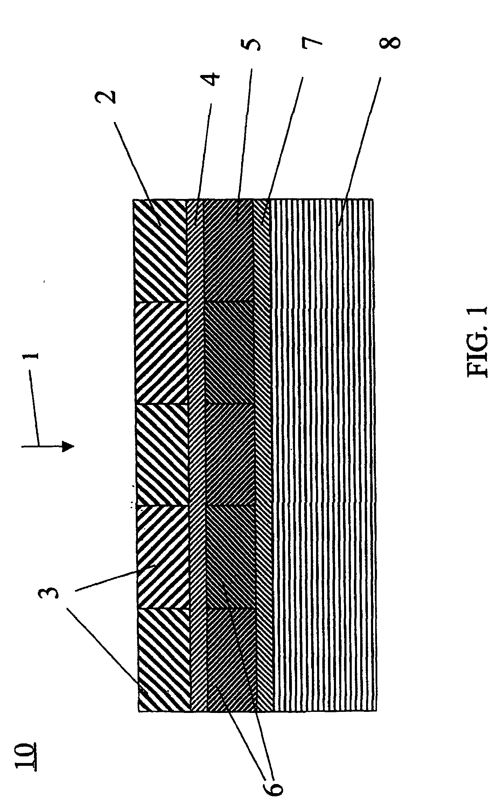

In Figur 1 bezeichnet die Bezugsziffer 10 ein Panzerungsverbundmaterial gemäß der Erfindung. Diese besteht aus einer der Bedrohungsseite, hier durch den Pfeil 1 dargestellt, zugewandte Frontschicht 2, die aus mehreren benachbarten, aneinander anschließenden Frontschichtsegmenten 3 aufgebaut ist. Die Frontschichtsegmente 3 sind auf einer ersten Tragschicht 4 angeordnet. Die Bezugsziffer 5 bezeichnet eine Stützschicht, die erfindungsgemäß aus Stützschichtsegmenten 6 besteht. Die Stützschichtsegmente 6 sind auf eine zweite Tragschicht 7 aufgebracht. An die zweite Tragschicht 7 schließt sich die der Bedrohungsseite 1 abgewandte rückwärtige Schicht 8, das Backing, an.

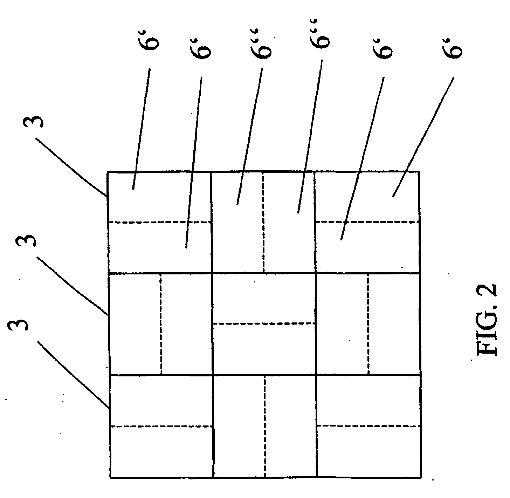

Figur 2 zeigt eine Aufsicht auf die Frontschicht 2 in Richtung des Pfeils 1 gemäß Figur 1. Die Frontschicht 2 ist beispielhaft aus neun quadratischen Frontschichtsegmenten 3 aufgebaut. Die erste Tragschicht 4 für die Frontschichtsegmente 3 wurde bei dieser Darstellung weggelassen, um zu zeigen wie die Stützschichtsegmente 6' und 6" beispielsweise relativ zu den Frontschichtsegmenten 3 angeordnet sein können. Die Fläche der Stützschichtsegmente 6' und 6" ist jeweils halb so groß wie die Fläche eines Frontschichtsegmentes 3. Abwechselnd werden unter einem Frontschichtsegment 3 zwei Stützschichtsegmente 6' angeordnet und unter dem benachbarten Frontschichtsegment zwei Stützschichtsegmente 6". Die Stützschichtsegmente 6' und 6" sind relativ zueinander um einen Winkel von 90° gedreht. Die zwei Stützschichtsegmente 6' bilden eine Gruppe und sind so unter einem Frontschichtsegment 3 angeordnet, dass sie mit diesem bündig abschließen. Das gleiche gilt für die beiden Stützschichtsegmente 6".

### Beispiel 1:

Die durchschusshemmenden Eigenschaften eines erfindungsgemäßen Panzerungsverbundmaterials wurden nach DIN EN 1522 geprüft. Das Verbundmaterial bestand aus einer 8,5 mm dicken Keramik, die aus Kacheln der Größe 30 x 30 mm aufgebaut war, auf einem ersten Träger aus einem zweilagigen Aramidlaminat aus TWARON® - Gewebe T750, einer 5 mm dicken Honeycomp-Wabe, die in Form von 30 x 30 mm großen Segmenten vorlag. Diese Stützschichtsegmente waren auf einer Lage selbstklebendem Glasgewebe als Träger befestigt. Das Backing bestand aus einem 18-lagigen Aramidiaminat (TWARON®- Laminat T750 gummiert). Die Dicke des Verbundmaterials betrug 24,5 mm und das Flächengewicht 471,9 g/dm².

Die Prüfung erfolgte unter folgenden Bedingungen:

| | |
|---|---|
| Kaliber | 7.62mm x 51 |
| Geschossart | VMS/HK (FNB) (Vollmantelspitz/Hartkern) |
| Geschossmasse | 9,75 g |
| Waffe | Messlauf, Dralllänge 254 mm |
| Lauflänge | 658 mm |
| Beschussentfernung | 10,00 m |
| | |
| Zusatzbedingungen | Trefferabstand Nr. 1/2 = 40 mm |
| | Trefferabstand Nr. 1/3 = 40 mm |
| | Trefferabstand Nr. 2/3 = 35 mm |

| Nr. | Geschw. V (7,50) | Energie E (7,50) | Durchschuss |
|---|---|---|---|
| 1 | 824 m/s | 3310 J | Nein |
| 2 | 828 m/s | 3342 J | Nein |
| 3 | 825 m/s | 3318 J | Nein |

Obige Daten belegen, dass das erfindungsgemäße Panzerungsverbundmaterial auch bei einem sehr geringen Trefferabstand, wobei Nr. 1 und Nr. 3 darüber hinaus noch Fugentreffer waren, die besonders schwer zu halten sind, hervorragende Eigenschaften aufweist und die Anforderungen der Widerstandsklasse FB7-NS nach DIN EN 1522 erfüllt.

### Beispiel 2:

Die durchschusshemmenden Eigenschaften eines weiteren erfindungsgemäßen Panzerungsverbundmaterials wurden nach DIN EN 1522 geprüft. Das Verbundmaterial bestand aus einer 9 mm dicken Keramik, die aus Kacheln der Größe 25 x 25 mm aufgebaut war, auf einem ersten Träger aus einem zweilagigen Aramidlaminat, einem 5 mm dicken Honeycomp-Waben-Material vom Typ Corlight, das in Form von 25 x 25 mm großen Segmenten vorlag. Das Honeycomb-Waben-Material bestand aus einer oberen und untereren Platte aus Glaswebe mit zwischen diesen angeordneten Papierwaben. Diese Stützschichtsegmente waren auf einer Lage selbstklebendem Glasgewebe als Träger befestigt Das Backing bestand aus einem 18-lagigen Aramidlaminat. In Richtung der Bedrohungsseite waren die Kacheln mit einer Lage Glasfasergewebe versehen. Die Dicke des Verbundmaterials betrug 25 mm und das Flächengewicht 501,2 g/dm².

Die Prüfung erfolgte unter folgenden Bedingungen:

| | |
|---|---|
| Kaliber | 7.62mm x 51 |
| Geschossart | HK FNB (Vollmantelspitz/Hartkern) |
| Geschossmasse | 9,75 g |
| Waffe | Messlauf, Dralllänge 254 mm |
| Lauflänge | 658 mm |
| Beschussentfemung | 10,00 m |
| | |
| Zusatzbedingungen | Trefferabstand Nr. 1/2 = 35 mm |
| | Trefferabstand Nr. 1/3 = 35 mm |
| | Trefferabstand Nr. 2/3 = 32 mm |

| Nr. | Geschw. V (7,50) | Energie E (7,50) | Durchschuss |
|---|---|---|---|
| 1 | 817 m/s | 3254 J | Nein |
| 2 | 820 m/s | 3278 J | Nein |
| 3 | 821 m/s | 3286 J | Nein |

Auch das erfindungsgemäße Panzerungsverbundmaterial gemäß Beispiel 2 weist bei einem sehr geringen Trefferabstand hervorragende Eigenschaften auf und erfüllt die Anforderungen der Widerstandsklasse FB7-NS nach DIN EN 1522.

### Vergleichsbeispiel:

Die durchschusshemmenden Eigenschaften eines Panzerungsverbundmateriats wurden nach DIN EN 1522 geprüft. Das Verbundmaterial bestand aus einer 8,5 mm dicken Keramik, die aus Kacheln der Größe 30 x 30 mm aufgebaut war, auf einem ersten Träger aus einem zweilagigen Aramidlaminat, einer 5 mm dicken Honeycomp-Wabe, die nicht segmentiert war. Das Backing bestand aus einem 18-lagigen Aramidlaminat. In Richtung der Bedrohungsseite waren die Kacheln mit einer Lage Glasfaser-Epoxy versehen. Die Dicke des Verbundmaterials betrug 24,4 mm und das Flächengewicht 463,4 g/dm².

Die Prüfung erfolgte unter folgenden Bedingungen:

| | |
|---|---|
| Kaliber | 7.62mm x 51 |
| Geschossart | VMS/HK (FNB) (Vollmantelspitz/Hartkern) |
| Geschossmasse | 9,75 g |
| Waffe | Messlauf, Dralllänge 254 mm |
| Lauflänge | 650 mm |
| Beschussentfernung | 10,00 m |
| | |
| Zusatzbedingungen | Trefferabstand Nr. 1/2 = 40 mm |
| | Trefferabstand Nr. 1/3 = 40 mm |
| | Trefferabstand Nr. 2/3 = 40 mm |

| Nr. | Geschw. V (7,50) | Energie E (7,50) | Durchschuss |
|---|---|---|---|
| 1 | 855 m/s | 3564 J | Nein |
| 2 | 828 m/s | 3342 J | Ja |
| 3 | 818 m/s | 3262 J | Nein |

Das Panzerungsmaterial des Vergleichsbeispiels zeigte bei einem Trefferbild mit gleichseitigem Dreieck der Seitenlänge 120 mm zwar keinen Durchschuss. Obige Daten belegen aber, dass ein Panzerungsverbundmaterial, das zwar eine Stützschicht aufweist, wobei diese aber nicht segmentiert ist, bei geringem Trefferabstand keine ausreichenden Beschusseigenschaften aufweist und damit nicht die geforderten günstigen Multihit-Eigenschaften besitzt.

## Patentansprüche

1. Panzerungsverbundmaterial (10) mindestens umfassend eine der Bedrohungsseite (1) zugewandte, auf einer ersten Tragschicht (4) angeordnete Frontschicht (2), die aus mehreren benachbarten, formschlüssig aneinander anschließenden Frontschichtsegmenten (3) besteht, eine der Bedrohungsseite (1) abgewandte rückwärtige Schicht (8) und eine zwischen Frontschicht (2) und rückwärtiger Schicht (8) angeordnete Stützschicht (5), die aus mehreren Stützschichtsegmenten (6) besteht, wobei die Stützschichtsegmente (6) eine Fläche parallel zur Frontschicht (2) aufweisen, die gleich groß ist oder kleiner ist als die Fläche der Frontschichtsegmente (3) parallel zur Frontschicht (2) und wobei die Stützschichtsegmente (6) so unterhalb den Frontschichtsegmenten (2) angeordnet sind, dass diese bezüglich ihrer Randbegrenzungen bündig übereinander angeordnet sind.

2. Panzerungsverbundmaterial nach Anspruch 1, **dadurch gekennzeichnet, dass** unter einem Frontschichtsegment (3) jeweils ein Stützschichtsegment (6) angeordnet ist, das die gleiche Fläche aufweist wie das Frontschichtsegment (2).

3. Panzerungsverbundmaterial nach Anspruch 1, **dadurch gekennzeichnet, dass** unter einem Frontschichtsegment (3) eine Gruppe aus zwei oder mehreren Stützschichtsegmenten (6) angeordnet sind, die insgesamt die gleiche Fläche aufweist wie das Frontschichtsegment (3) und wobei die Gruppe der Stützschichtsegmente (6) sich mit ihrer Randbegrenzung bündig an die Randbegrenzung des Frontschichtsegments (3) anpasst.

4. Panzerungsverbundmaterial nach einem oder mehreren der Ansprüche 1 bis 3, **dadurch gekennzeichnet, dass** die erste Tragschicht (4) für die Frontschichtsegmente (3) aus einem faserverstärktem Material geringer Dicke besteht.

5. Panzerungsverbundmaterial nach Anspruch 4, **dadurch gekennzeichnet, daß** die erste Tragschicht (4) aus einem Aramidlaminat, einem glasfaserverstärktem Kunststoff oder Polyethylenlaminat besteht.

6. Panzerungsverbundmaterial nach einem oder mehreren der Ansprüche 1 bis 5, **dadurch gekennzeichnet, dass** die Stützschichtsegmente (6) auf einer zweiten Tragschicht (7) angeordnet sind.

7. Panzerungsverbundmaterial nach Anspruch 6, **dadurch gekennzeichnet, dass** die zweite Tragschicht (7) für die Stützschichtsegmente (6) aus einem faserverstärktem Kunststoff, einer Kunststofffolie oder einem Glasgewebe besteht.

8. Panzerungsverbundmaterial nach einem oder mehreren der Ansprüche 1 bis 7, **dadurch gekennzeichnet, dass** die Frontschichtsegmente (3) Keramikkacheln oder Stahlplättchen sind.

9. Panzerungsverbundmaterial nach einem oder mehreren der Ansprüche 1 bis 8, **dadurch gekennzeichnet, dass** die Prontschichtsegmente (3) und die Stützschichtsegmente (6) eine quadratische, rechteckige, dreieckige oder hexagonale Form haben.

10. Panzerungsverbundmaterial nach einem oder mehreren der Ansprüche 1 bis 9, **dadurch gekennzeichnet, dass** die Stützschichtsegmente (6) aus einem leichten, steifen Material bestehen.

11. Panzerungsverbundmaterial nach einem oder mehreren der Ansprüche 1 bis 10, **dadurch gekennzeichnet, dass** die Stützschichtsegmente (6) aus einer zwischen einer oberen und einer unteren dünnen Platte angeordneten Wabenstruktur bestehen.

12. Panzerungsverbundmaterial nach einem oder mehreren der Ansprüche 1 bis 11, **dadurch gekennzeichnet, dass** die rückwärtige Schicht (8) aus einem Faserverbundwerkstoff besteht.

13. Panzerungsverbundmaterial nach einem oder, mehreren der Ansprüche 1 bis 12, **dadurch gekennzeichnet, dass** die rückwärtige Schicht (8) aus einem Aramidlaminat besteht.

14. Panzerungsverbundmaterial nach einem oder mehreren der Ansprüche 1 bis 13, **dadurch gekennzeichnet, dass** die Frontschichtsegmente (3) auf der ersten Tragschicht (4) aufgeklebt sind und dass die Stützschichtsegmente (6) auf der zweiten Tragschicht (7) aufgeklebt sind.

15. Panzerungsverbundmaterial nach einem oder mehreren der Ansprüche 1 bis 14, **dadurch gekennzeichnet, dass** die erste Tragschicht (4) mit den Frontschichtsegmenten (3) mit den auf die zweite Tragschicht (7) aufgebrachten Stützschichtsegmenten (6) mittels eines Klebstoffs verbunden is und dass die zweite Tragschicht (7) mit der rückwärtigen Schicht (8) mittels eines Klebers verbunden ist.

16. Panzerungsverbundmaterial nach einem oder mehreren der Ansprüche 1 bis 15, **dadurch gekennzeichnet, dass** die Frontschichtsegmente (3) auf der der Bedrohung zugewandten Seite (1) mit einer Deckschicht versehen sind.

## Claims

1. Composite armour-plating material (10) comprising at least: a front layer (2), facing the impact side (1) and mounted on a first sub-layer (4), the front layer (2) consisting of a plurality of neighbouring front-layer segments (3) with form-fit contact between adjacent segments; a rear layer (8) facing away from the impact side (1); and a supporting layer (5) disposed between the front layer (2) and the rear layer (8) and consisting of a plurality of supporting-layer segments (6), where the supporting-layer segments (6) present a surface parallel to the front layer (2) whose area is the same as or less than the area of the front-layer segments (3) parallel to the front layer (2), and where the supporting-layer segments (6) are so arranged underneath the front-layer segments (3) that their edges are exactly superposed.

2. Composite armour-plating material according to Claim 1, **characterised in that** a supporting-layer segment (6) is arranged under each front-layer segment (3) and has the same area as the front-layer segment (3).

3. Composite armour-plating material according to Claim 1, **characterised in that** a group of two or more supporting-layer segments (6) are placed under a front layer segment (3), the group having the same total area as the front-layer segment (3) and the edges of the group and those of the front-layer segment (3) being exactly superposed.

4. Composite armour-plating material according to one or more of Claims 1 to 3, **characterised in that** the first sub-layer (4) for the front-layer segments (3) consists of a fibre-reinforced material of low thickness.

5. Composite armour-plating material according to Claim 4, **characterised in that** the first sub-layer (4) consists of an aramid laminate, a glass-fibre reinforced plastic or a polyethylene laminate.

6. Composite armour-plating material according to one or more of Claims 1 to 5, **characterised in that** the supporting-layer segments (6) are mounted on a second sub-layer (7).

7. Composite armour-plating material according to Claim 6, **characterised in that** the second sub-layer (7) for the supporting-layer segments (6) consists of a fibre-reinforced plastic, plastic sheeting or a glass fabric.

8. Composite armour-plating material according to one or more of Claims 1 to 7, **characterised in that** the front-layer segments (3) are ceramic tiles or small steel plates.

9. Composite armour-plating material according to one or more of Claims 1 to 8, **characterised in that** the front-layer segments (3) and the supporting-layer segments (6) are square, rectangular, triangular or hexagonal in shape.

10. Composite armour-plating material according to one or more of Claims 1 to 9, **characterised in that** the supporting-layer segments (6) are made of a rigid, lightweight material.

11. Composite armour-plating material according to one or more of Claims 1 to 10, **characterised in that** the supporting-layer segments (6) consist of a honeycomb structure disposed between an upper and a lower thin plate.

12. Composite armour-plating material according to one or more of Claims 1 to 11, **characterised in that** the rear layer (8) consists of a fibrous composite.

13. Composite armour-plating material according to one or more of Claims 1 to 12, **characterised in that** the rear layer (8) consists of an aramid laminate.

14. Composite armour-plating material according to one or more of Claims 1 to 13, **characterised in that** the front-layer segments (3) are affixed with adhesive to the first sub-layer (4) and that the supporting-layer segments (6) are affixed with adhesive to the second sub-layer (7).

15. Composite armour-plating material according to one or more of Claims 1 to 14, **characterised in that** the first sub-layer (4) bearing the front-layer segments (3) is affixed with adhesive to the supporting-layer segments (6) mounted on the second sub-layer (7), and that the second sub-layer (7) is affixed with adhesive to the rear layer (8).

16. Composite armour-plating material according to one or more of Claims 1 to 15, **characterised in that** the front-layer segments (3) are provided with a covering layer on the impact side (1).

## Revendications

1. Matériau composite de blindage (10) qui comprend au moins une couche frontale (2) disposée sur une première couche de support (4) et tournée vers le côté hostile (1), constituée de plusieurs segments (3) voisins de couche frontale, qui se raccordent les uns aux autres en correspondance géométrique, une couche arrière (8) non tournée vers le côté hostile (1) et une couche d'appui (5) disposée entre la couche frontale (2) et la couche arrière (8) et constituée de plusieurs segments (6) de couche d'appui, dans lequel les segments (6) de la couche d'appui présentent une surface parallèle à la couche frontale (2) qui est de même taille ou plus petite que la surface des segments (3) de la couche frontale; parallèle à la couche frontale (2), et dans lequel les segments (6) de la couche d'appui sont disposés en dessous des segments (2) de la couche frontale de manière à être disposés les uns au-dessus des autres avec leur bordure alignée.

2. Matériau composite de blindage selon la revendication 1, **caractérisé en ce qu'**un segment (6) de la couche d'appui qui présente la même surface que le segment (2) de la couche frontale, est disposé en dessous de chaque segment (3) de la couche frontale.

3. Matériau composite de blindage selon la revendication 1, **caractérisé en ce qu'**un groupe constitué de deux ou de plusieurs segments (6) de la couche d'appui est disposé en dessous d'un segment (3) de la couche frontale et présente globalement la même surface que le segment (3) de la couche frontale, et dans lequel la bordure des segments (6) de la couche d'appui de ce groupe est alignée sur la bordure des segments (3) de la couche frontale.

4. Matériau composite de blindage selon l'une ou plusieurs des revendications 1 à 3, **caractérisé en ce que** la première couche de support (4) pour les segments (3) de la couche frontale est constituée d'un matériau renforcé de fibres et de faible épaisseur.

5. Matériau composite de blindage selon la revendication 4, **caractérisé en ce que** la première couche de support (4) est constituée d'un stratifié d'aramide, d'une matière synthétique renforcée de fibres de verre ou d'un stratifié de polyéthylène.

6. Matériau composite de blindage selon l'une ou plusieurs des revendications 1 à 5, **caractérisé en ce que** les segments (6) de la couche d'appui sont disposés sur une deuxième couche de support (7).

7. Matériau composite de blindage selon la revendication 6, **caractérisé en ce que** la deuxième couche de support (7) pour les segments (6) de la couche d'appui est constituée d'une matière synthétique renforcée de fibres, d'une feuille de matière synthétique ou d'un tissu de verre.

8. Matériau composite de blindage selon l'une ou plusieurs des revendications 1 à 7, **caractérisé en ce que** les segments (3) de la couche frontale sont des carreaux de céramique ou des plaquettes d'acier.

9. Matériau composite de blindage selon l'une ou plusieurs des revendications 1 à 8, **caractérisé en ce que** les segments (3) de la couche frontale et les segments (6) de la couche d'appui ont une forme carrée, rectangulaire, triangulaire ou hexagonale.

10. Matériau composite de blindage selon l'une ou plusieurs des revendications 1 à 9, **caractérisé en ce que** les segments (6) de la couche d'appui sont constitués d'un matériau léger et rigide.

11. Matériau composite de blindage selon l'une' ou plusieurs des revendications 1 à 10, **caractérisé en ce que** les segments (6) de la couche d'appui sont constitués d'une structure en nid d'abeilles disposée entre une mince plaque supérieure et une mince plaque inférieure.

12. Matériau composite de blindage selon l'une ou plusieurs des revendications 1 à 11, **caractérisé en ce que** la couche arrière (8) est constituée d'un matériau composite à fibres.

13. Matériau composite de blindage selon l'une ou plusieurs des revendications 1 à 12, **caractérisé en ce que** la couche arrière (8) est constituée d'un stratifié d'aramide.

14. Matériau composite de blindage selon l'une ou plusieurs des revendications 1 à 13, **caractérisé en ce que** les segments (3) de la couche frontale sont collés sur la première couche de support (4), et **en ce que** les segments (6) de couche d'appui sont collés sur la deuxième couche de support (7).

15. Matériau composite de blindage selon l'une ou plusieurs des revendications 1 à 14, **caractérisé en ce que** la première couche de support (4) avec les segments (3) de la couche frontale est reliée au moyen d'un adhésif aux segments (6) de la couche d'appui disposés sur la deuxième couche de support (7), et **en ce que** la deuxième couche de support (7) est reliée à la couche arrière (8) au moyen d'un adhésif.

16. Matériau composite de blindage selon l'une ou plusieurs des revendications 1 à 15, **caractérisé en ce que** les segments (3) de la couche frontale sont dotés d'une couche de recouvrement sur leur face (1) tournée vers le côté hostile.
